# EUROPEAN PATENT APPLICATION

(11) **EP 1 890 185 A1**
(43) Date of publication of application: **20.02.2008**
(21) Application number: 07111340.1
(22) Date of filing: 28.06.2007
(51) Int. Cl.: G02F 1/1335, G02F 1/1337

(54) **Transflective pixel structure in lcd panel and method for fabricating the same**

(30) Priority: 15.08.2006 US 504438
(71) Applicant: TPO Displays Corp., Miao-Li County (TW)
(72) Inventor: Lin, Chi-Huang, 710, Yongkang City, Tainan County (TW)
(74) Representative: Patentanwälte Kewitz & Kollegen

(57) **Abstract**

The invention relates to a transflective pixel structure in a liquid crystal display panel which comprises lower (200) and upper (214) substrates opposing each other and a liquid crystal layer (206) disposed therebetween. The lower substrate comprises a reflective region (R) and an adjacent transmissive region (T). A protrusion (210) is formed on the surface of the upper substrate facing and corresponding to the low substrate of the reflective region, wherein an edge of the protrusion defines a transition from the reflective region to the transmissive region, wherein such edge extends along a first direction. An alignment film (208) covers the protrusion and the upper substrate, and is rubbed along a second direction parallel to the first direction or extending from the reflective region to the transmissive region to intersect with the first direction. A liquid crystal layer is disposed between the lower and upper substrates.

## Description

### BACKGROUND OF THE INVENTION

### Field of the Invention

The invention relates to liquid crystal display (LCD) technology, and in particular to a transflective pixel structure in a liquid crystal display panel with improved contrast ratio (CR) and aperture ratio (AR), and a method for fabricating the same.

### Description of the Related Art

Liquid crystal display (LCD) devices are widely used in electronic devices such as portable computers, PDAs and cell phones. Typically, LCD devices are classified into transmissive and reflective types. The former utilizes a backlight as the light source and the latter utilizes ambient light. The transmissive LCD device exhibits a high contrast ratio and good color saturation. However, it is difficult to decrease power consumption due to power requirements of the backlight. Reflective LCD devices have the advantage of power-saving under bright ambient light. However, their contrast ratio is lower and color saturation inferior to transmission types. Moreover, the reflective LCD device is limited when functioning in dark ambient conditions.

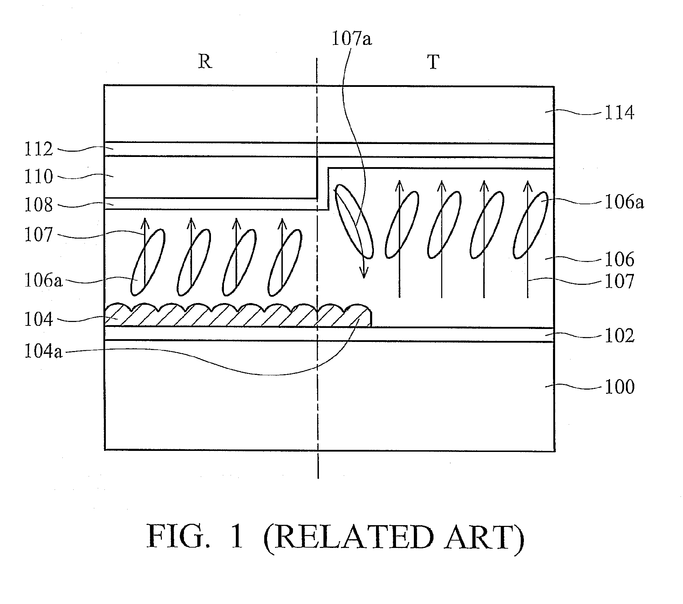

In order to improve these drawbacks, a transflective LCD device has been developed, displaying in both transmissive and reflective modes. Fig. 1 illustrates a conventional transflective LCD device. The device includes a lower substrate 100 (referred to as an array substrate), an upper substrate 114 and a liquid crystal layer 106 disposed therebetween. The lower substrate 100 comprises a pixel region (consisting of a reflective region R and a transmissive region T) defined by one pair of scan lines (not shown) and one pair of data lines (not shown). A thin film transistor (not shown) is disposed on the lower substrate 100 of the reflective region R and electrically connected to the scan line and the data line. A pixel electrode is disposed on the lower substrate 100. The pixel electrode includes a transparent electrode 102 and an overlying reflective electrode 104. The reflective electrode 104 is disposed in the reflective region R. A color filter (CF) 112 and a protrusion 110 are successively disposed on the upper substrate 114. The protrusion 110 formed on the color filter 112 (also referred to as step on CF (SOC) structure) corresponds to the reflective region R to form a transflective LCD device with dual cell gap.

In the transflective LCD device with dual cell gap, however, step height caused by the protrusion 110 may induce fringe field 107a. The direction of the fringe field 107a may be different from the applied filed 107 on the liquid crystal layer 106, such that the liquid crystal molecules 106a near the boundary between the reflective region R and the transmissive region T have a different orientation from the other liquid crystal molecules 106a away from the boundary. The consequence is that a light leakage region is present in the transmissive region T near the boundary between the reflective region R and the transmissive region T, when the liquid crystal molecules 106a away from such boundary block light. Thus, contrast ratio of the LCD device is reduced. In order to address this problem, a reflective electrode extending portion 104a may be formed in the transmissive region T near the boundary between the reflective region R and the transmissive region T, thereby blocking the light through the light leakage region. Aperture ratio of the LCD device, however, is reduced due to increased area of the reflective electrode.

Thus, there exists a need in the art for development of an improved LCD device which can improve contrast ratio while maintaining aperture ratio.

### BRIEF SUMMARY OF THE INVENTION

The present invention provides an improved LCD device with improved contrast ratio while maintaining aperture ratio. This is accomplished by using a rubbing direction on the alignment layer to offset the light leakage effect of the fringe field at the step height of the protrusion at the reflective region R. In one aspect of the present invention, the rubbing direction extends substantially parallel to the boundary of the protrusion between the reflective and transmissive regions. In another aspect of the present invention, the rubbing direction extends from the reflective region to the transmissive region.

A transflective pixel structure in a liquid crystal display panel and a method for fabricating the same are provided. An embodiment of a transflective pixel structure in a liquid crystal display panel comprises lower and upper substrates opposing each other and a liquid crystal layer disposed therebetween. The lower substrate comprises a reflective region and an adjacent transmissive region. A protrusion is formed on the surface of the upper substrate facing and corresponding to the low substrate of the reflective region, wherein an edge of the protrusion defines a transition from the reflective region to the transmissive region, wherein such edge extends along a first direction. An alignment film covers the protrusion and the upper substrate, and is rubbed along a second direction parallel to the first direction or extending from the reflective region to the transmissive region to intersect with the first direction. A liquid crystal layer is disposed between the lower and upper substrates.

An embodiment of a method for fabricating a transflective pixel structure in a liquid crystal display panel is provided, wherein the method comprises providing a lower substrate comprising a reflective region and an adjacent transmissive region. An upper substrate opposite the lower substrate is provided. A protrusion is formed on the surface of the upper substrate facing and corresponding to the low substrate of the reflective region, wherein an edge of the protrusion defines a transition from the reflective region to the transmissive region, wherein such edge extends along a first direction. The protrusion and the upper substrate are covered by an alignment film. The alignment film is rubbed along a second direction parallel to the first direction or extending from the reflective region to the transmissive region to intersect with the first direction. A liquid crystal layer is formed between the lower and upper substrates.

### BRIEF DESCRIPTION OF THE DRAWINGS

The invention can be more fully understood by reading the subsequent detailed description and examples with references made to the accompanying drawings, wherein:

Fig. 1 is a cross section of a display pixel in a conventional transflective LCD device with dual cell gap;

Figs. 2A to 2B are cross-sections of an embodiment of a display pixel and a method for fabricating a display pixel incorporating a transflective LCD pixel structure;

Fig. 3 is a plan view of an embodiment of an upper substrate structure of the transflective LCD pixel structure shown in Fig. 2B;

Fig. 4 is a plan view of another embodiment of an upper substrate structure of the transflective LCD pixel structure shown in Fig. 2B;

Fig. 5 is a plan view of yet another embodiment of an upper substrate structure of the transflective LCD device shown in Fig. 2B; and

Fig. 6 schematically shows an embodiment of a system for displaying images.

Fig. 7 is a schematic diagram representation of a liquid crystal display device having an array of display pixels, in accordance with one embodiment of the present invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Systems for displaying images and fabrication methods will now be described.

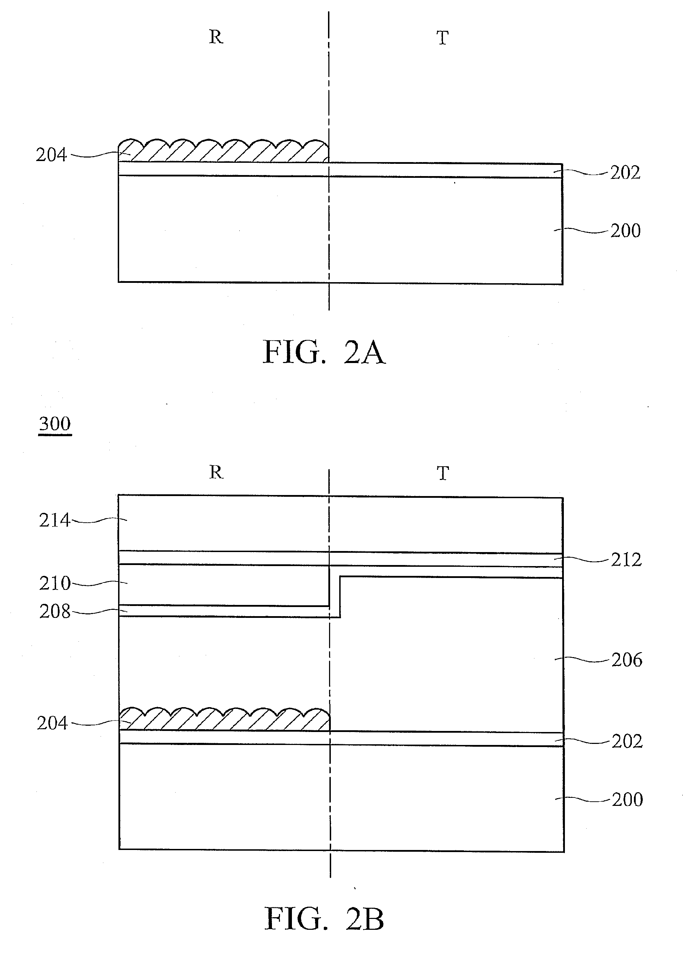

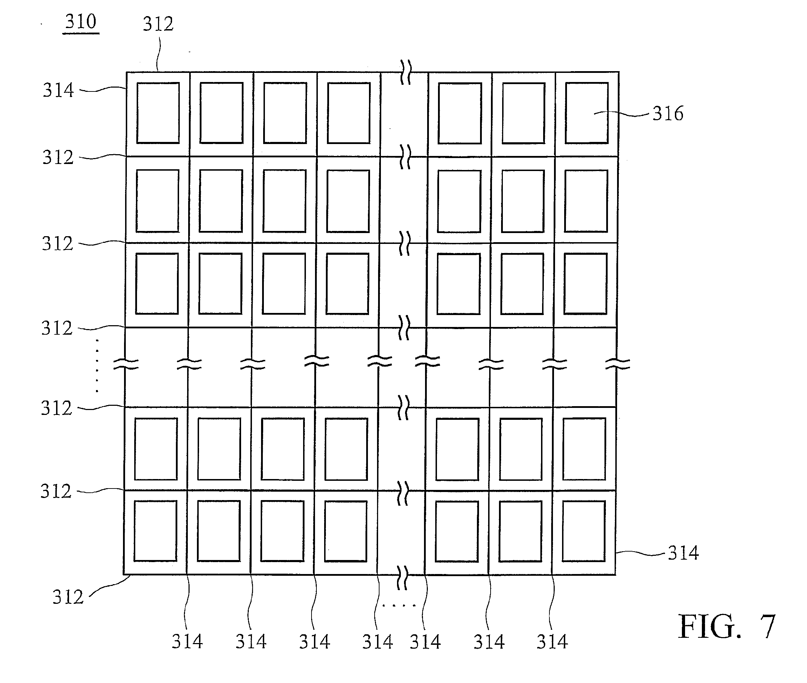

Fig. 7 is a schematic diagram of a system for displaying images in accordance with one embodiment of the present invention, showing an array 310 of display pixel regions 316 defined by an orthogonal network of scan and data lines 312 and 314. Fig. 2B depicts an embodiment of the structure of a display pixel region in such a system. Specifically, the system incorporates a transflective thin film transistor liquid crystal display (TFT-LCD) device 300 comprising a lower substrate 200 (referred to as an array substrate), an upper substrate 214 and a liquid crystal layer 206 disposed therebetween. The lower and upper substrates 200 and 214 are transparent, such as glass, quartz or other material. Typically, the lower substrate 200 comprises a plurality of pixel regions defined by scan lines and data lines. In order to simplify the diagram, only a pixel region defined at a node of a scan line and a data line is depicted in Fig. 2B (or referring to Fig. 7, a pixel region 316 is generally located in a space defined between two adjacent scan lines 312 and two adjacent data lines 314). Generally, the pixel region consists of a reflective region R and an adjacent transmissive region T. Moreover, the lower substrate 200 may contain one or more thin film transistors (not shown) disposed in the reflective region R and electrically connected to the corresponding scan and data lines. Additionally, the lower substrate 200 may contain a protective or planarization layer (not shown) covering the thin film transistor(s), the scan and data lines and an alignment film (not shown) disposing on the protective/planarization layer.

A pixel electrode is disposed on the lower substrate 200. The pixel electrode comprises a transparent electrode 202 and an overlying reflective electrode 204. The reflective electrode 204 is disposed in the reflective region R. The transparent electrode 202 is disposed in the transmissive region T and extends under the reflective electrode 204.

A color filter (CF) 212 and a protrusion 210 are successively disposed on the surface of the upper substrate 214 facing the lower substrate 200. In this embodiment, the protrusion 210 disposed on the color filter 212 (also referred to as step on CF (SOC) structure) corresponds to the reflective region R to define the portion of the color filter 212 corresponding to the transmissive region T. An edge of the protrusion defines the transition from the reflective region R to the transmissive region T.

An alignment film 208 covers the protrusion 210 and the exposed portion of the color filter 212. The alignment film 208 may be rubbed along a specific direction, such that the fringe field due to the step height caused by the protrusion 210 can be mitigated, thereby adjusting the alignment direction of the liquid crystal molecules (not shown) near the boundary of the reflective region R and the transmissive region T (near the edge of the protrusion 210 between the reflective region R and the transmissive region T) close to the direction of the applied field. As a result, light leakage can be reduced without extending the reflective electrode 204 to the transmissive region T. That is, the contrast ratio can be improved while maintaining the aperture ratio. Such a specific direction is described in detail later.

Figs. 2A to 2B illustrate a method for fabricating a system for displaying images incorporating a transflective TFTLCD device. In Fig. 2A, a lower substrate 200, such as transparent glass or quartz, is provided. The lower substrate 200 may contain data lines, scan lines and thin film transistors (TFTs). One or more TFTs may be electrically connected to the corresponding scan and data lines and may be located in a corresponding pixel region defined by one pair of scan lines and one pair of data lines. Here, in order to simplify the diagram, a flat substrate comprises a pixel region consisting of a reflective region R and a transmissive region T is depicted. Additionally, a protective or planarization layer (not shown) may be formed on the lower substrate 200. The protective layer may comprise a single layer, such as a silicon oxide or silicon nitride layer, or multiple layers, such as a stacked silicon oxide layer and silicon nitride layer. Next, a transparent layer 202 is deposited on lower substrate 200 in the reflective and transmissive regions R and T, serving as a transparent electrode for the transmissive region T. In this embodiment, the transparent electrode 202 may comprise indium tin oxide (ITO) or indium zinc oxide (IZO) formed by conventional deposition. For example, the transparent electrode 202 can be formed by sputtering. An opaque conducting layer (not shown) is subsequently deposited on the transparent electrode 202 for subsequently forming the reflective electrode 204. The opaque conducting layer may comprise Al, Ag, Mo, AINd, or a combination thereof. Moreover, the opaque conducting layer can be formed by conventional deposition, such as sputtering. The transparent electrode 202 and the opaque conducting layer are electrically connected to each other for formation of a pixel electrode in subsequent steps. Moreover, the pixel electrode is electrically connected to the TFT. Next, lithography and etching are performed on the opaque conducting layer for formation of a reflective electrode 204 in the reflective region R, and the pixel electrode is complete.

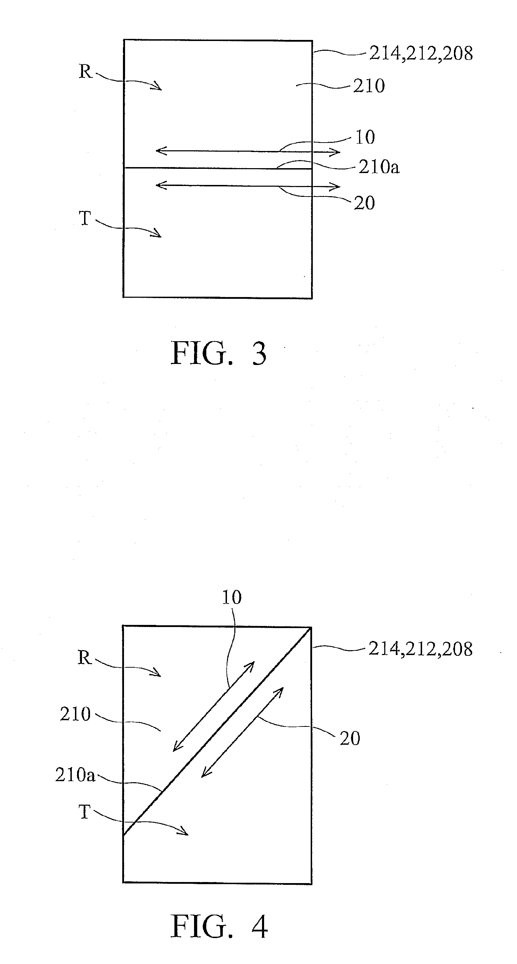

In Fig. 2B, an upper substrate 214, such as transparent glass or quartz, is provided. A color filter 212 is formed on the upper substrate 214. Next, a protrusion 210 corresponding to the reflective region R is formed on the color filter 212, such that the protrusion 210 faces and corresponds to the lower substrate 200 of the reflective region R. In this embodiment, the protrusion 210 may comprise silicon oxide, silicon nitride or a combination thereof and be formed by conventional deposition, lithography and etching. Moreover, the protrusion 210 can be rectangular or triangular from the top view, such that the edge 210a of the protrusion 210 between the reflective and transmissive regions R and T extends along a first direction 10. Generally, the first direction 10 is parallel to one edge of a typical rectangular pixel region, such that the protrusion 210 is rectangular from the top view, as shown in Fig. 3. In some embodiments, the first direction 10 may intersect with the sides of the pixel region (i.e., the scan and/or data line), such that the protrusion 210 is triangular from the top view, as shown in Fig. 4, or trapezoid from the top view. In Fig. 3 and Fig. 4, scan lines and data lines (not shown) run along the edge of the pixel regions shown, which can also be seen in Fig. 7.

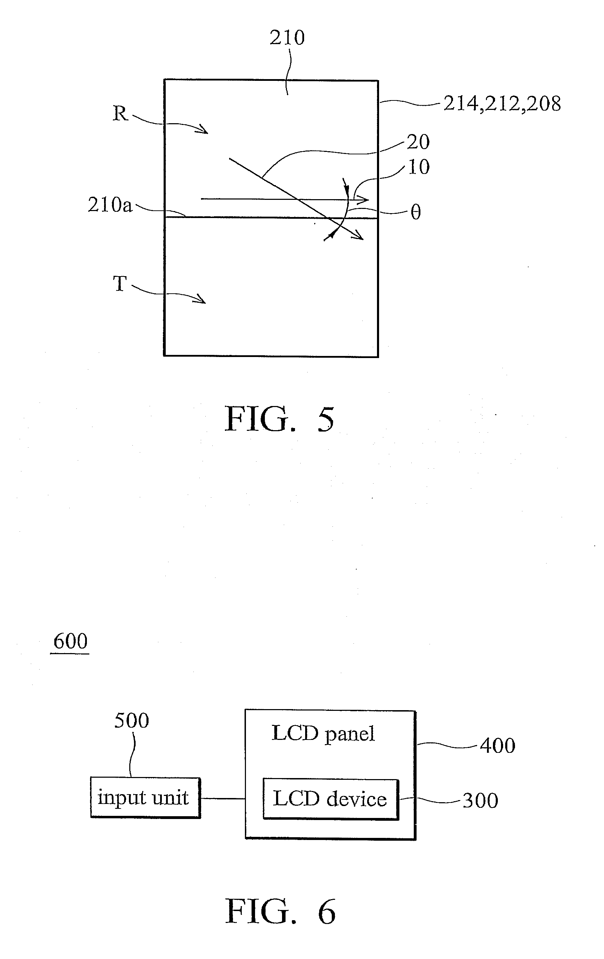

Next, the protrusion 210 and the exposed color filter 212 overlying the upper substrate 214 are covered by an alignment film 208, such as a polymide (PI) film. The alignment film 208 is subsequently rubbed by a conventional rubbing process. In this embodiment, in particular, the alignment film 208 is rubbed along a second direction 20 parallel to the first direction 10, as shown in Figs, 3 and 4. As mentioned, since the fringe field induced by the step height can be mitigated to adjust the alignment direction of the liquid crystal molecules near the edge 210a of the protrusion 210 between the reflective region R and the transmissive region T close to the direction of the applied field, light leakage region can be reduced without additionally extending the reflective electrode 204 to the transmissive region T. That is, contrast ratio can be improved while maintaining aperture ratio. Additionally, the light leakage region can be reduced when the second direction 20 extends in a direction from the reflective region R to the transmissive region T. For example, the second direction 20 may intersect with the first direction 10 to form an angle θ, as shown in Fig. 5. In this embodiment, the angle θ may be more than 0° and less than 180° (i.e. 0° < θ < 180°), and less than 30° is preferable. In the prior art, the rubbing direction extends in a direction from the transmissive region to the reflective region.

Finally, the upper substrate 214 having the color filter 212, the protrusion 210 and the alignment film 208 thereon and the lower substrate 200 having the pixel electrode thereon are sealed, such that the upper substrate 214 is opposite to the lower substrate 200. A liquid crystal material is injected into the space between the upper and lower substrates 214 and 200 to form a liquid crystal layer 206 therebetween.

According to the invention, since the alignment film has a specific rubbing direction, the fringe field can be mitigated to adjust the alignment direction of the liquid crystal molecules near the light leakage region. Accordingly, the contrast ratio can be improved without increasing the area of the reflective electrode, thus aperture ratio of transflective TFTLCD devices can be maintained.

Fig. 6 schematically shows an embodiment of a system for displaying images which is implemented as a transflective TFT-LCD panel 400 or an electronic device 600 incorporating such a transflective TFT-LCD panel 400. The electronic device may include a laptop computer, a mobile phone, a digital camera, a personal digital assistant (PDA), a desktop computer, a television, a car display or a portable DVD player.. As shown in Fig. 6, the transflective TFT-LCD panel 400 may comprise a transflective TFT-LCD device 300 incorporating the transflective pixel structure shown in Fig. 2B. As shown in Fig. 6, the electronic device 600 may comprise an input and/or control unit 500. The input and/or control unit 500 is operatively coupled to the display panel 400 and provides input signals (e.g. image signals) and/or control signals thereto for generating images..

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A transflective pixel structure in a liquid crystal display panel, comprising:
a lower substrate (200) comprising a reflective region (R) and an adjacent transmissive region (T);
an upper substrate (214) opposite the lower substrate;
a protrusion (210) formed on the surface of the upper substrate (214) facing and corresponding to the lower substrate of the reflective region (R), wherein an edge of the protrusion defines a transition from the reflective region (R) to the transmissive region (T), wherein such edge extends along a first direction (10);
an alignment film (208) covering the protrusion (210) and the upper substrate (214), said alignment film being rubbed along a second direction (20), wherein the second direction is parallel to the first direction or extends from the reflective region (R) to the transmissive region (T) to intersect with the first direction; and
a liquid crystal layer (206) disposed between the lower and upper substrates.

2. The pixel structure as claimed in claim 1, wherein the second direction (20) intersects with the first direction (10) to form an angle less than 30°.

3. The pixel structure as claimed in claim 1 or 2, wherein the protrusion (210) is rectangular or triangular from the top view.

4. A liquid crystal display panel comprising an array (310) of pixel structures each as claimed in any of the preceding claims, and a plurality of scan lines (312) and data lines (314) operatively coupled to the array of pixel structures.

5. A display device, comprising the liquid crystal display panel as claimed in claim 4.

6. An electronic device, comprising:
the liquid crystal display device as claimed in claim 5; and
a control unit operatively coupled to the liquid crystal display device to provide input to the liquid crystal display device for displaying images.

7. The electronic device as claimed in claim 6, wherein the electronic device comprises a laptop computer, a mobile phone, a digital camera, a personal digital assistant, a desktop computer, a television, a car display or a portable DVD player.

8. A method for fabricating a transflective pixel structure in a liquid crystal display panel, the method comprising:
providing a lower substrate (200) comprising a reflective region (R) and an adjacent transmissive region (T);
providing an upper substrate (214) opposite the lower substrate;
forming a protrusion (210) on the surface of the upper substrate (214) facing and corresponding to the lower substrate of the reflective region (R), wherein an edge of the protrusion defines a transition from the reflective region (R) to the transmissive region (T), wherein the edge extends along a first direction (10);
forming an alignment film (208) on the protrusion (210) and the upper substrate (214);
rubbing the alignment film (208) along a second direction (20) parallel to the first direction (10) or extending from the reflective region (R) to the transmissive region (T) to intersect with the first direction; and
forming a liquid crystal layer (206) between the lower and upper substrates;

9. The method as claimed in claim 8, wherein the second direction (20) intersects with the first direction (10) to form an angle less than 30°.

10. The method as claimed in claim 8 or 9, wherein the protrusion (210) is rectangular or triangular from the top view.
